# EUROPEAN PATENT SPECIFICATION

(11) **EP 3 246 916 B1**
(45) Date of publication and mention of the grant of the patent: **02.12.2020**
(21) Application number: 16192594.6
(22) Date of filing: 06.10.2016
(51) Int. Cl.: G10L 15/22, G10L 15/26, G06F 3/16, H04M 1/725, G06F 40/166

(54) **MOBILE TERMINAL AND CONTROLLING METHOD THEREOF**
MOBILES ENDGERÄT UND STEUERUNGSVERFAHREN DAFÜR
TERMINAL MOBILE ET SON PROCÉDÉ DE CONTRÔLE

(30) Priority: 16.05.2016 KR 20160059333
(43) Date of publication of application: 22.11.2017
(73) Proprietor: LG Electronics Inc., Seoul 07336 (KR)
(72) Inventor: HEO, Jeongyun, 06772 SEOUL (KR); CHU, Junghoon, 06772 SEOUL (KR); JANG, Yujune, 06772 SEOUL (KR)
(74) Representative: Plasseraud IP

(56) References cited:
- US-A1- 2014 298 177
- Erica Sadun ET AL: "Getting Started with Siri - Correcting Siri", Talking to Siri: Learning the Language of Apple's Intelligent Assistant, 11 March 2013 (2013-03-11), pages 1-4, XP055344202, Retrieved from the Internet: URL:http://www.quepublishing.com/articles/ article.aspx?p=2010878&seqNum=6 [retrieved on 2017-02-09]
- Erica Sadun ET AL: "Getting Started with Siri - Siri Listens", Talking to Siri: Learning the Language of Apple's Intelligent Assistant, 11 March 2013 (2013-03-11), pages 1-2, XP055344243, Retrieved from the Internet: URL:http://www.quepublishing.com/articles/ article.aspx?p=2010878&seqNum=5 [retrieved on 2017-02-09]

## Description

### BACKGROUND OF THE INVENTION

### Field of the Invention

The present invention relates to a mobile terminal and controlling method thereof, and more particularly, to a mobile terminal and controlling method thereof, suitable for outputting a text through a display unit and editing the outputted text based on a voice input sensed within a preset time.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, voice recognition technologies such as Q Voice by LG Electronics, Siri by Apple, Google Voice, S voice by Samsung Electronics and the like tend to be popularized for mobile terminals. And, voice recognition in a wearable device such as a watch type mobile terminal, a glass type mobile terminal or the like is utilized as a most significant text input means.

However, since a display screen of a watch type mobile terminal or a glass type mobile terminal is small, it is inconvenient for a user to accurately touch an editing-desired region in case of intending to edit or correct a text after voice recognition. Document: Erica Sadun ET AL, "Getting Started with Siri - Correcting Siri", Talking to Siri: Learning the Language of Apple's Intelligent Assistant, (20130311), pages 1 - 4, URL: http://www.quepublishing.com/articles/article.aspx?p=2010878&seqNum=6, (20170209), XP055344202 discloses details of the Siri application. Document: Erica Sadun ET AL, "Getting Started with Siri - Siri Listens", Talking to Siri: Learning the Language of Apple's Intelligent Assistant, (20130311), pages 1 - 2, URL: http://www.quepublishing.com/articles/article.aspx?p=2010878&seqNum=5, (20170209), XP055344243 also discloses details of Siri. US2014/298177 discloses methods of processing user interactions with a computing device including voice interactions.

### SUMMARY OF THE INVENTION

Accordingly, an object of the present invention is to address the above-noted and other problems.

Accordingly, embodiments of the present invention are directed to a mobile terminal and controlling method thereof that substantially obviate one or more problems due to limitations and disadvantages of the related art.

One object of the present invention is to provide a mobile terminal and controlling method thereof, by which a first text is changed based on a second text corresponding to a sensed voice input by sensing a voice input in a preset time in a state that the first text is outputted to a display unit.

Another object to provide a mobile terminal and controlling method thereof, by which a third text corresponding to a sensed voice input is additionally outputted to a region adjacent to a first text by sensing a voice input in a preset time in a state that the first text is outputted to a display unit.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to claim 1 and a method for controlling a mobile terminal according to claim 15 are provided.

Any examples and embodiments subsequently referred to herein are just examples useful for understanding the invention.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the preferred embodiments of the present invention are exemplary and explanatory and are intended to provide further explanation of the invention as claimed.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 2 is a conceptual view of a deformable mobile terminal according to an alternative embodiment of the present disclosure;
FIG. 3 is a conceptual view of a wearable mobile terminal according to another alternative embodiment of the present disclosure;
FIG. 4 is a conceptual view of a wearable mobile terminal according to another alternative embodiment of the present disclosure;
FIG. 5 is a block diagram to describe configuration modules of a mobile terminal according to one embodiment of the present invention;
FIG. 6 is a diagram to describe a trigger signal according to one embodiment of the present invention;
FIG. 7 is a diagram to describe one example of editing a text based on a voice input according to one embodiment of the present invention;
FIG. 8 is a diagram to describe one example of sending a text after a preset time according to one embodiment of the present invention;
FIG. 9 is a diagram to describe one example of adding a text based on a voice input according to one embodiment of the present invention;
FIG. 10 is a diagram to describe one example of editing a text using a cursor indicator according to one embodiment of the present invention;
FIG. 11 is a diagram to describe another example of editing a text using a cursor indicator according to one embodiment of the present invention;
FIG. 12 is a diagram to describe one example of adding a text using a cursor indicator according to one embodiment of the present invention;
FIG. 13 is a diagram to describe another example of adding a text using a cursor indicator according to one embodiment of the present invention;
FIG. 14 is a diagram to describe one example of outputting a recommended operation menu based on a content of text according to one embodiment of the present invention;
FIG. 15 is a diagram to describe another example of outputting a recommended operation menu based on a content of text according to one embodiment of the present invention;
FIG. 16 is a diagram to describe one example of editing a text of a blocked region according to one embodiment of the present invention;
FIG. 17 is a flowchart to describe one example of editing a text based on a voice input according to one embodiment of the present invention; and
FIG. 18 is a flowchart to describe one example of adding a text based on a voice input according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

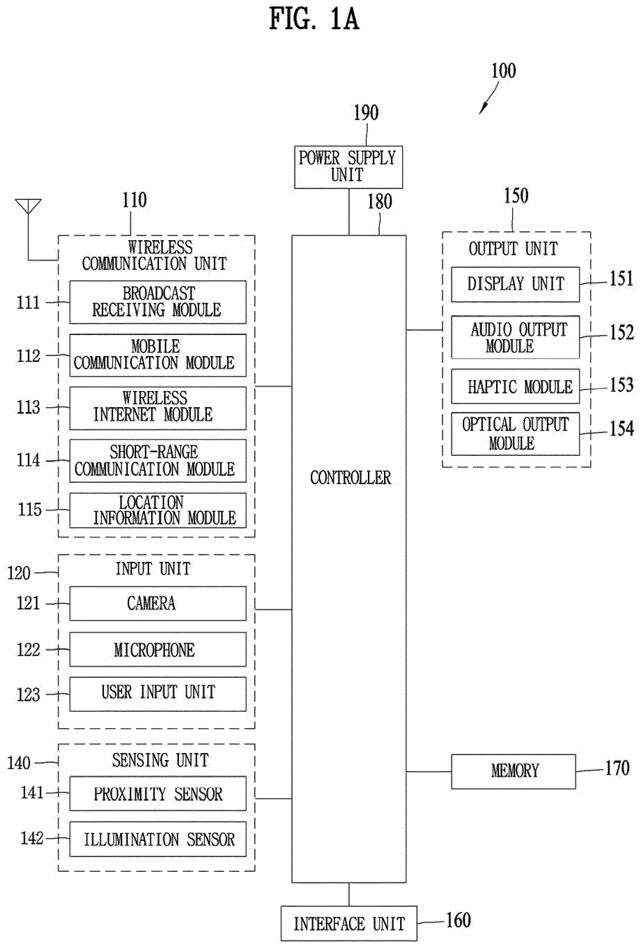

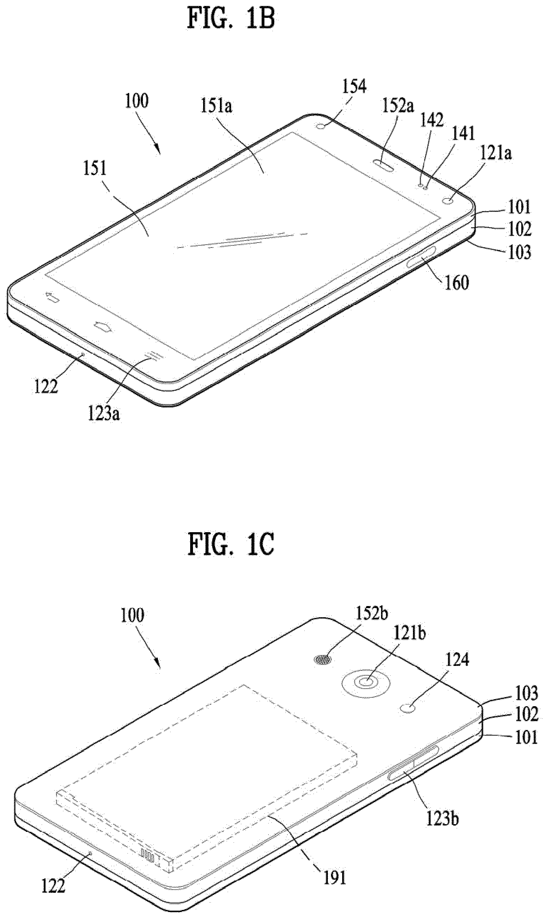

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to a**s an "array camera." When the second camera 121**b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

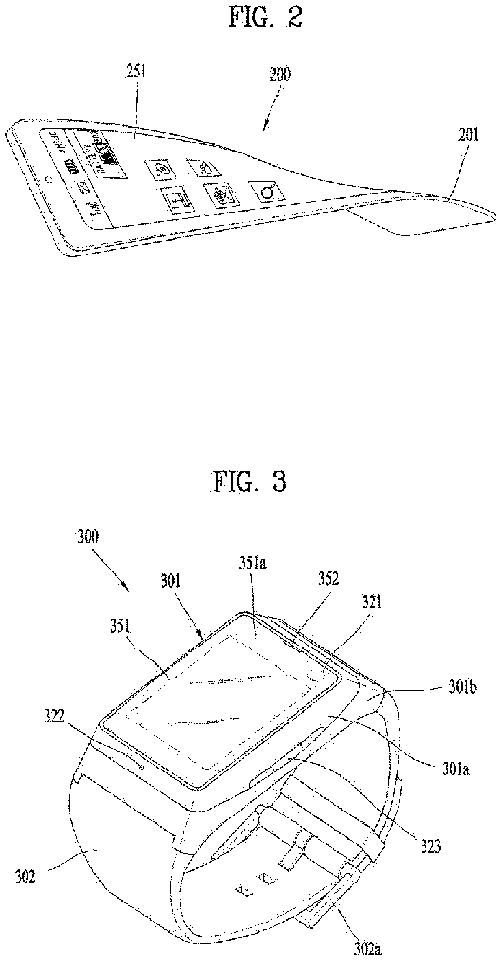

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously.

The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When in a state that the flexible display unit 251 is not deformed (for example, in a state with an infinite radius of curvature and referred to as a first state), a display region of the flexible display unit 251 includes a generally flat surface. When in a state that the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized in such a manner that a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251.

A battery (not shown in this figure) located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 may transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion (not shown) electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

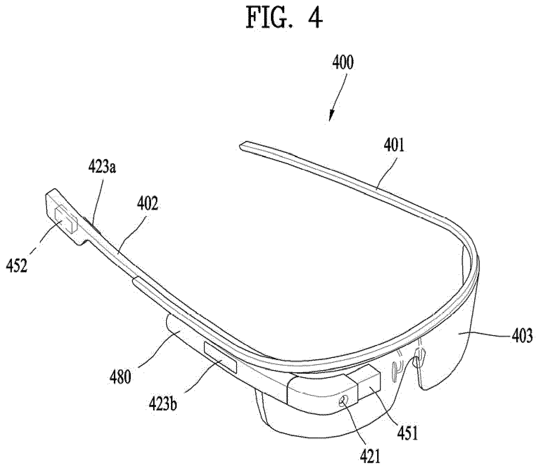

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user.

In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

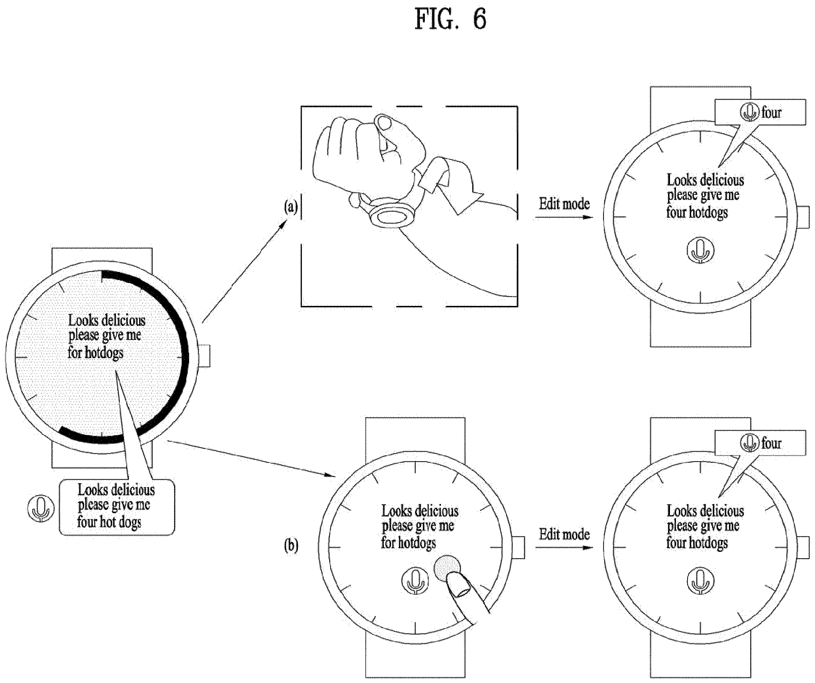

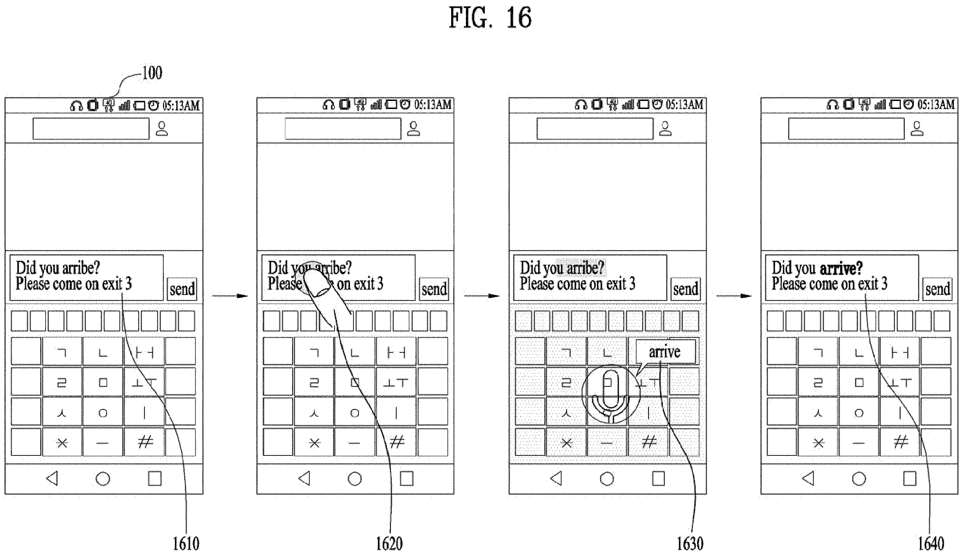

Embodiments of the present invention are described in detail by taking the mobile terminal 300 shown in FIG. 3 as one example of a mobile terminal with reference to FIGs. 6 to 15 as follows. Yet, as shown in FIG. 16, it is a matter of course that a mobile terminal according to one embodiment of the present invention can be embodied into the mobile terminal 100 shown in FIG. 1A. Namely, a mobile terminal according to one embodiment of the present invention can be embodied into one of the mobile terminals 100, 200, 300 and 400 shown in FIGs. 1 to 4.

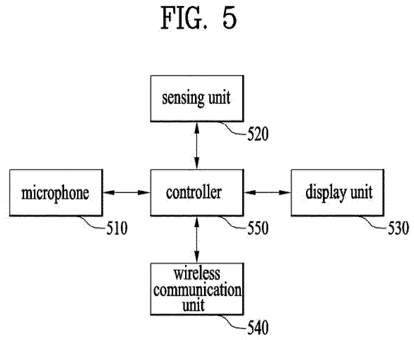

In the following description, embodiments of the present invention are described in detail with reference to FIGs. 5 to FIG. 18. In describing and understanding embodiments of the present invention, the former description with reference to FIGs. 1 to 4 can be referred to. Moreover, the above-mentioned mobile terminal may include a mobile terminal according to one embodiment of the present invention.

FIG. 5 is a block diagram to describe configuration modules of a mobile terminal according to one embodiment of the present invention.

Referring to FIG. 5, a mobile terminal according to one embodiment of the present invention may include a microphone 510, a sensing unit 520, a display unit 530, a wireless communication unit 540 and a controller 550.

The microphone 510 can process an external audio signal into electrical audio data. The microphone 510 of the present invention may include the microphone 122 shown in FIG. 1A or the microphone 322 shown in FIG. 3. According to one embodiment of the present invention, the microphone 510 can sense an audio input.

The sensing unit 520 senses user's various inputs the mobile terminal and an environment of the mobile terminal and is able to deliver a sensing result to enable the controller 550 to perform a corresponding operation. According to the present invention, the sensing unit 520 is provided to the display unit 530 and may be embodied into a touchscreen. Moreover, the sensing unit 520 of the present invention may be embodied into the sensing unit 140 shown in FIG. 1A. According to one embodiment of the present invention, the sensing unit 520 can sense at least one of a trigger signal and an input signal. In this case, the trigger signal and the input signal may include various input signals such as a gesture signal, a touch signal and the like.

The display unit 530 may display visual information. In this case, the visual information may include text, indicator, icon, content, application, image, video and the like. The display unit 530 can output visual information to a screen based on a control command of the controller 550. The display unit 530 of the present invention may be embodied into the display 151 shown in FIG. 1A or the display unit 351 shown in FIG. 3. According to one embodiment of the present invention, the display unit 530 can output text corresponding to an audio or voice input.

The wireless communication unit 540 performs communications and transmit/receive data signals, using various protocols between the mobile terminal and an external device. The wireless communication unit 540 of the present invention can be embodied into the wireless communication unit 110 shown in FIG. 1A. Namely, the mobile terminal can transceive data with the external device through the wireless communication unit 540 using one of the broadcast receiving module 111, the mobile communication module 112, the wireless internet module 113 and the short range communication module 114. According to one embodiment of the present invention, the wireless communication unit 540 can transmit data including text to the external device. In this case, the external device may correspond to another mobile terminal.

The controller 550 processes data, controls the respective units of the mobile terminal, and controls data transmissions/receptions between the units. The controller 550 of the present invention may be embodied into the controller 180 shown in FIG. 1A. According to one embodiment of the present invention, the controller 550 recognizes an audio input sensed through the microphone 510 and is able to convert it into text., According to one embodiment of the present invention, the controller 550 can output the converted text to the display unit 530.

According to one embodiment of the present invention, operations performed by the mobile terminal can be controlled by the controller 550. Yet, for clarity of the following description and drawings, such operations may be illustrated and described as performed/controlled by the mobile terminal.

### Embodiment for describing trigger signal

A mobile terminal according to the present invention can activate a text edit mode or a text add mode by sensing a trigger signal. According to one embodiment of the present invention, a mobile terminal can distinctively activate a text editing mode or a text adding mode in accordance with a trigger signal.

FIG. 6 is a diagram to describe a trigger signal according to one embodiment of the present invention. In the following description with reference to FIG. 6, description redundant with FIG. 5 shall be omitted.

Referring to FIG. 6, a mobile terminal can output a first text to a display unit. In this case, the first text may correspond to a text based on audio input. According to one embodiment of the present invention, the mobile terminal can convert a voice or audio input sensed through a microphone into a text. In this case, a technology (STT, Speech to Text) for converting an audio input into a text can utilize all technologies of the related art known to the public. The first text may correspond to a text inputted through soft keys or hard keys.

The example shown in FIG. 6 is described as follows. The mobile terminal can sense a voice input 'Looks delicious please give me four hot dogs'. Hence, the mobile terminal can output 'Looks delicious please give me for hotdogs' to the display unit. In particular, although a user inputted the voice 'four hotdogs', the mobile terminal misrecognize 'four' into 'for' and may then output 'for hotdogs'. According to one embodiment of the present invention, provided is a method of facilitating a misrecognized voice input to be edited in a mobile terminal. FIG. 6 (a) and FIG. 6 (b) are provided to describe trigger signals for editing a voice-inputted text. FIG. 6 (a) is a diagram to describe a case of sensing a gesture signal as a trigger signal, while FIG. 6 (b) is a diagram to describe a case of sensing a touch input signal as a trigger signal.

Referring to FIG. 6 (a), while a first text is outputted, a mobile terminal can sense a trigger signal. In this case, the trigger signal may correspond to a gesture signal. For instance, while a user wears the mobile terminal, the trigger signal may correspond to a gesture of turning a wrist having the mobile terminal worn thereon or a gesture of bringing the mobile terminal worn wrist to near user's mouth.

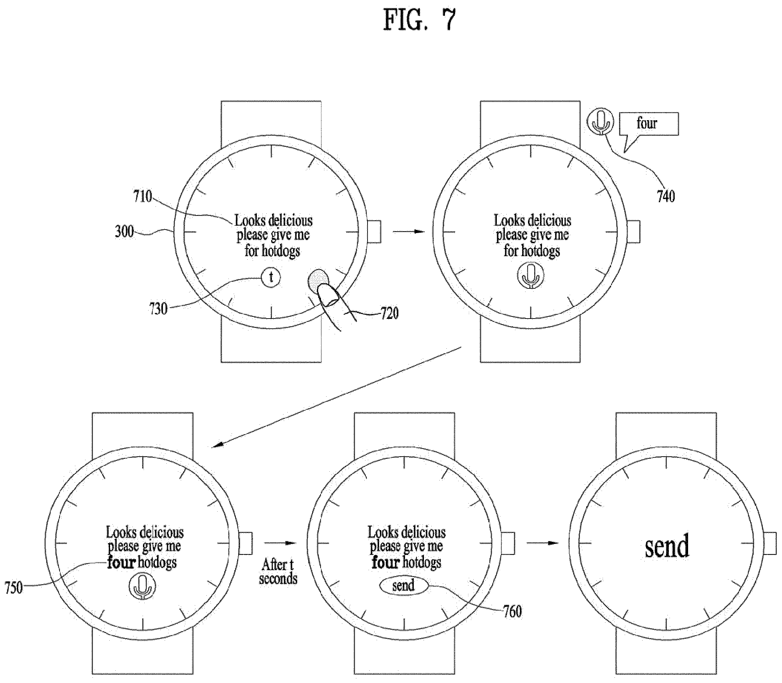

According to one embodiment of the present invention, if sensing a trigger signal, the mobile terminal can activate a text edit mode. In this case, the text edit mode may correspond to a waiting mode for sensing an input signal for editing a previously outputted text. While the text edit mode is activated, the mobile terminal can sense a first voice input. Based on the sensed first voice input, the mobile terminal can edit the previously outputted text. This shall be described in detail with reference to FIG. 7 later.

Referring to FIG. 6 (b), while a first text is outputted, a mobile terminal can sense a trigger signal. In this case, unlike FIG. 6 (a), the trigger signal may correspond to a touch input signal. For instance, the trigger signal may correspond to an input signal for a user to touch a random region of a display unit of the mobile terminal. According to one embodiment of the present invention, if sensing a trigger signal, the mobile terminal can activate a text edit mode. While the text edit mode is activated, the mobile terminal can sense a first voice input. Based on the sensed first voice input, the mobile terminal can edit the previously outputted text. This shall be described in detail with reference to FIG. 7 later.

Therefore, the mobile terminal can activate the text edit mode for editing the previously outputted text through the trigger signal.

Moreover, the mobile terminal can previously set whether a trigger signal is sensed [not shown in the drawing]. According to one embodiment of the present invention, the mobile terminal can set the text edit mode to be automatically activated for preset duration (e.g., 3 seconds) while the first text is outputted. For instance, while the first text is outputted, although a trigger signal is not sensed, the mobile terminal can activate the waiting mode for sensing the first voice input for 3 seconds. Hence, while the first text is outputted, if the first voice input is sensed in 3 seconds, the mobile terminal can edit the first text based on the first voice input.

### Embodiment of editing or adding text based on voice input

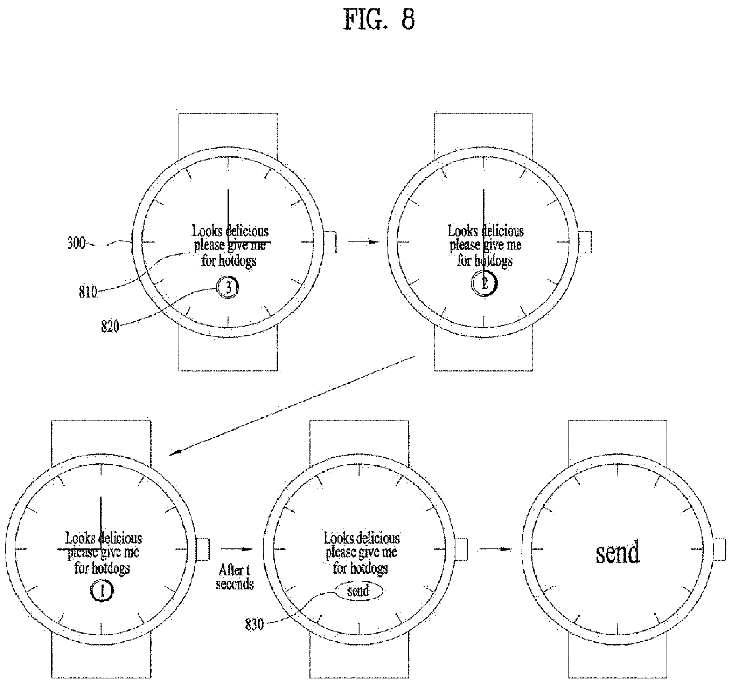

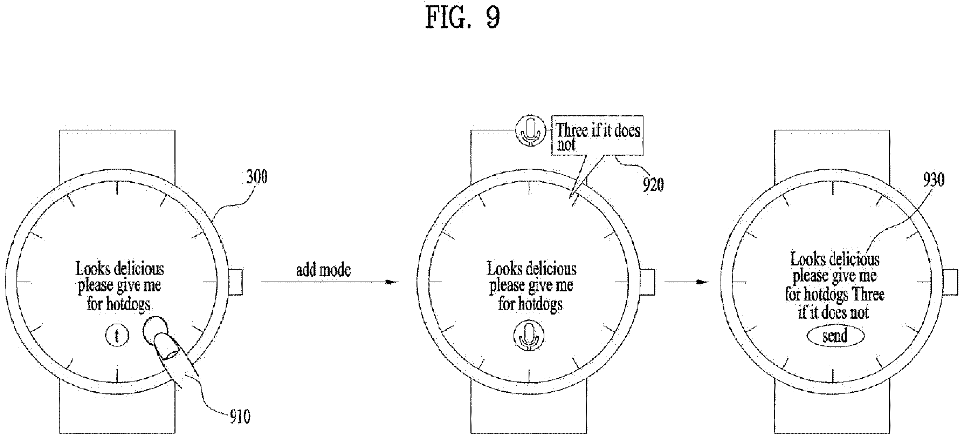

While a text is outputted, a mobile terminal can edit or add a text corresponding to a voice input. FIG. 7 is a diagram to describe one example of editing a text based on a voice input applied in a preset time after sensing a touch input. FIG. 8 is a diagram to describe one example of sending a text to an external device without editing the text. FIG. 9 is a diagram to describe one example of adding a text based on a voice input applied in a preset time after sensing a touch input different from that of FIG. 7.

FIG. 7 is a diagram to describe one example of editing a text based on a voice input according to one embodiment of the present invention. In the following description with reference to FIG. 7, description redundant with FIG. 5 or FIG. 6 shall be omitted.

Referring to a first diagram of FIG. 7, a mobile terminal 300 can output a first text 710. According to the example shown in FIG. 7, the mobile terminal 300 can output 'Looks delicious please give me for hotdogs' to a display unit. According to one embodiment of the present invention, while a first text 710 is outputted, the mobile terminal 300 can sense a trigger signal 720. In this case, the trigger signal 720 may correspond to the former trigger signal of FIG. 6. The trigger signal 720 may correspond to a signal of touching a display unit of the mobile terminal. In this case, the trigger signal 720 may be characterized in being a signal of touching a random region of the display unit. Hence, the mobile terminal 300 can activate a text edit mode by sensing the trigger signal 720.

According to one embodiment of the present invention, if the text edit mode is activated, the mobile terminal 300 can output a time indicator 730. In this case, the time indicator 730 may correspond to an indicator indicating a preset time (e.g., t seconds in Fig. 7). Moreover, as mentioned in the foregoing description with reference to FIG. 6, despite failing to sense the trigger signal 720, the mobile terminal 300 activates the text edit mode and is able to output the time indicator 730. In this case, the time indicator 730 may include one of various indicators (e.g., an indicator in numeral shape, an indicator in watch shape, an indicator in sandglass shape, etc.) indicating a preset time.

Referring to a second diagram of FIG. 7, while the text edit mode is activated, the mobile terminal 300 can sense a first voice input 740 in a preset time. For instance, the mobile terminal 300 can sense the first voice input 740 in 3 seconds. According to the example shown in FIG. 7, the mobile terminal 300 can sense 'four' as the first voice input 740.

Referring to a third diagram of FIG. 7, the mobile terminal 300 can determine whether a second text (e.g., four) corresponding to the sensed first voice input 740 corresponds to a preset similarity with at least one portion of the first text 710. In particular, in order to determine whether the second text corresponds to the preset similarity with the at least one portion of the first text 710, the mobile terminal 300 can use a method of determination based on pronunciation similarity. In this case, it is a matter of course that the pronunciation similarity based determination method can utilize all the related art technologies known to the public. For instance, the related art technologies known to the public may include SoundEx algorithm, NYSIIS algorithm, Metaphone algorithm and the like. Although the pronunciation similarity based determining method is taken as one example of the method of determining whether to correspond to the preset similarity, it is a matter of course that various conventional determination methods can be used.

According to the example shown in FIG. 7, the first text 710 may include 'Looks delicious please give me for hotdogs' and the second text may include 'four'. According to one embodiment of the present invention, the mobile terminal 300 can determine that 'for' corresponding to at least one portion of the first text 710 and 'four' corresponding to the second text correspond to the preset similarity. Hence, the mobile terminal 300 can substitute the at least one portion 'for' of the first text 710 with the second text 'four'.

Referring to a third diagram of FIG. 7, if the second text corresponding to the first voice input 740 corresponds to the preset similarity with the at least one portion of the first text 710, the mobile terminal 300 can output a third text 750 having at least one portion of the first text 710 substituted with the second text. For instance, the mobile terminal 300 can output 'Looks delicious please give me four hotdogs' as the third text 750.

Referring to a fourth diagram of FIG. 7, while the third text 750 is outputted, if a preset time passes, the mobile terminal 300 can output a send indicator 760. In this case, the preset time may correspond to the t seconds mentioned in the first diagram of FIG. 7. For instance, while the third text 750 is outputted, if 3 seconds passes, the mobile terminal 300 can output the send indicator 760. For instance, the send indicator 760 may correspond to an indicator indicating an icon 'send'.

Referring to a fifth diagram of FIG. 7, while the send indicator 760 is outputted, after the preset time has passed, the mobile terminal 300 can send the third text 750 to an external device. Moreover, if sensing an input signal of touching the send indicator 760, the mobile terminal 300 can send the third text 750 to the external device [not shown in the drawing].

Therefore, in case that a misrecognized text exists in a previously outputted text, a user can easily edit or modify the text by inputting voice of the misrecognized text one more time in a preset time without directly touching a region of the misrecognized text.

FIG. 8 is a diagram to describe one example of sending a text after a preset time according to one embodiment of the present invention. In the following description with reference to FIG. 8, description redundant with FIGs. 5 to 7 shall be omitted.

Referring to a first diagram of FIG. 8, a mobile terminal 300 can output a first text 810 to a display unit. According to the example shown in FIG. 8, the mobile terminal 300 can output 'Looks delicious please give me for hotdogs' as the first text 810.

According to one embodiment of the present invention, while the first text 810 is outputted, the mobile terminal 300 can output a time indicator 820. In this case, the time indicator 820 can correspond to a dispatch waiting time of the first text 810. According to the example shown in FIG. 8, the dispatch waiting time may correspond to 3 seconds. According to one embodiment of the present invention, if a trigger signal for a text edit mode or a voice input for editing a text is not sensed in the dispatch waiting time '3 seconds', the mobile terminal 300 can send the first text 810 to an external device.

Referring to second and third diagrams of FIG. 8, the mobile terminal outputs the time indicator 820 indicating the dispatch waiting time. In doing so, the time indicator 820 can count down 3 seconds. According to the example shown in FIG. 8, while the first text is outputted, the mobile terminal 300 can output the time indicator 820 indicating the countdown like 3 second, 2 second and 1 second.

Referring to fourth and fifth diagrams of FIG. 8, the mobile terminal 300 can output a send indicator 830 after elapse of the dispatch waiting time. While the send indicator 830 is outputted, the mobile terminal 300 can send the first text 810 to an external device after expiration of a preset time. For instance, when the preset time is 1 second, if 1 second expires after outputting the icon 'send' as the send indicator 830, the mobile terminal 300 can send the first text 810 to the external device. Moreover, as mentioned in the foregoing description, in response to a touch input signal of selecting the send indicator 830 after outputting the send indicator 830, the mobile terminal can send the first text 810 to the external device.

FIG. 9 is a diagram to describe one example of adding a text based on a voice input according to one embodiment of the present invention. In the following description with reference to FIG. 9, description redundant with FIGs. 5 to 8 shall be omitted.

Referring to a first diagram of FIG. 9, a mobile terminal 300 can output a first text to a display unit. For instance, the mobile terminal 300 can output 'Looks delicious please give me for hotdogs' as the first text. While the first text is outputted, the mobile terminal 300 can sense a trigger signal 910. In this case, the trigger signal 910 may correspond to the former trigger signal in FIG. 6. Moreover, the trigger signal 910 may correspond to a trigger signal different from the trigger signals of FIG. 7 and FIG. 8.

According to one embodiment of the present invention, the trigger signal 910 may correspond to a signal of touching the display unit of the mobile terminal. In this case, the trigger signal 910 may be characterized in being a signal of touching a random region of the display unit. Moreover, if the trigger signal for activating the text edit mode in FIG. 7 or FIG. 8 corresponds to a long touch input signal, the trigger signal 910 of FIG. 9 may correspond to a short touch input signal. In this case, the long touch input signal may mean an input signal of long touching the display unit over preset time, while the short touch input signal may mean an input signal of short touching the display unit within the preset time.

According to one embodiment of the present invention, in case of sensing the trigger signal 910, the mobile terminal 300 can activate a text add mode. In this case, the text add mode may correspond to a waiting mode for sensing an input signal of adding a text to a preset region adjacent to a previously outputted text. Namely, according to one embodiment of the present invention, the mobile terminal can distinctively activate a text edit mode or a text add mode based on a preset trigger signal.

According to one embodiment of the present invention, if the text add mode is activated, the mobile terminal 300 can output a time indicator. In this case, the time indicator may correspond to an indicator indicating a preset time (e.g., t seconds in FIG. 9).

Referring to a second diagram of FIG. 9, while the text add mode is activated, the mobile terminal 300 can sense a fist voice input 920 in the preset time. For instance, the mobile terminal 300 can sense the first voice input 920 within 3 seconds. **According to the example shown in** **FIG. 9****, the mobile terminal 300 can sense 'T**hree, if it **does not' as the first voice input 920.**

Referring to a third diagram of FIG. 9, the mobile terminal 300 can output a second text 930 (e.g., Three, if it does not) corresponding to the sensed first voice input 920. According to one embodiment of the present invention, the mobile terminal 300 can additionally output the second text 930 to a preset region adjacent to the first text. For instance, the mobile terminal 300 can additionally output the second text 930 to a right region of a last character of the first text.

According to one embodiment of the present invention, while the second text 930 is outputted, if a preset time passes, the mobile terminal 300 can output a send indicator. Moreover, while the send indicator is outputted, the mobile terminal 300 can send the first text and the second text 930 to an external device after elapse of a preset time [not shown in the drawing].

### Embodiment of editing or adding text using cursor indicator

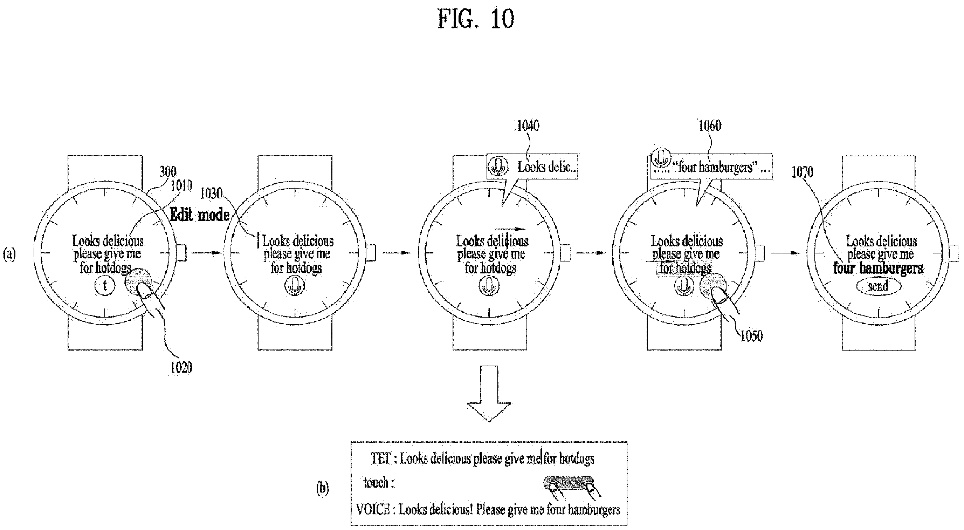

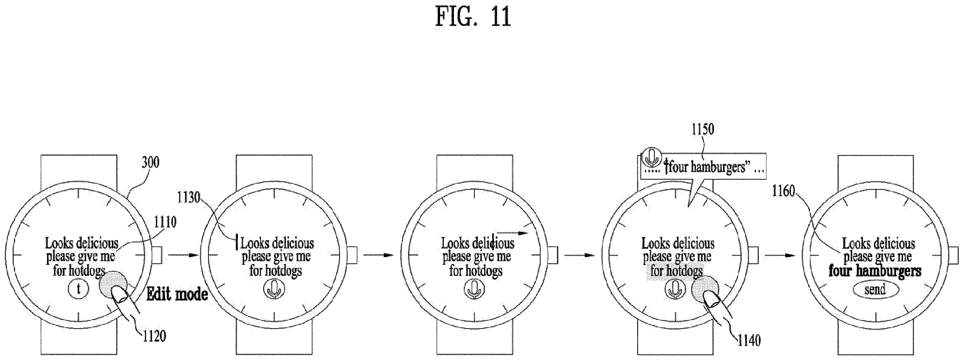

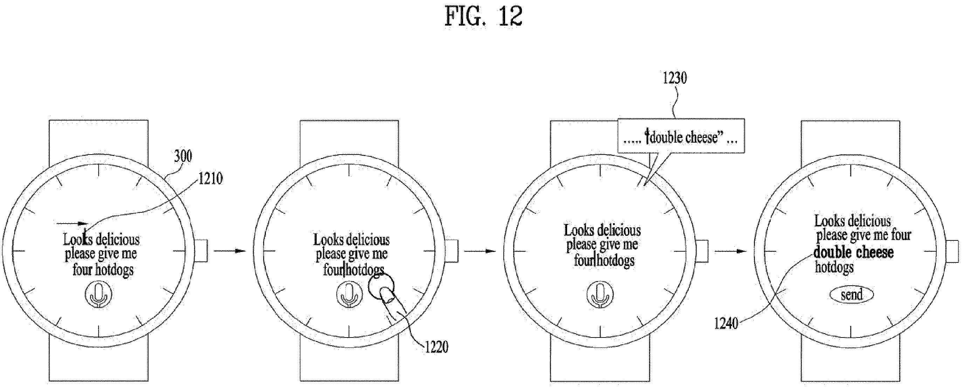

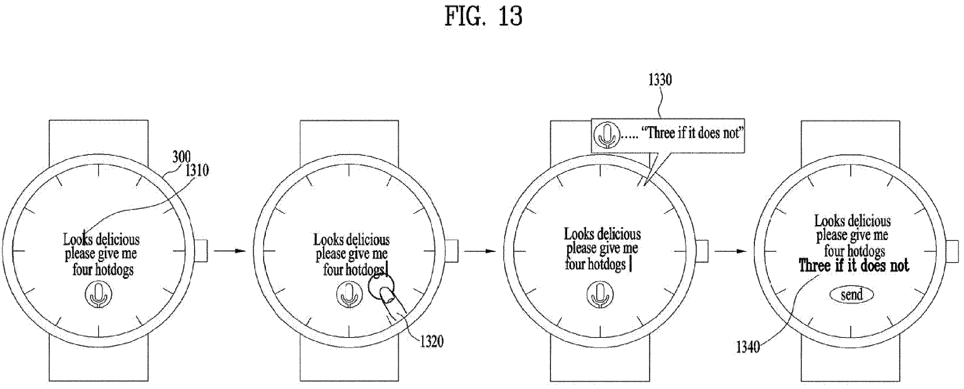

A mobile terminal can indicate a region to edit or add a text using a cursor indicator. FIG. 10 and FIG. 11 are diagrams for examples of editing a text. In particular, FIG. 10 is a diagram to describe an example of moving a cursor indicator in response to a voice input and FIG. 11 is a diagram to describe an example of moving a cursor indicator at a preset speed. FIG. 12 and FIG. 13 are diagrams for examples of adding a text. In particular, FIG. 12 is a diagram to describe an example of adding a new text in the middle of a previously outputted text and FIG. 13 is a diagram to describe an example of adding a new text to an end of a previously outputted text.

FIG. 10 is a diagram to describe one example of editing a text using a cursor indicator according to one embodiment of the present invention. In the following description with reference to FIG. 10, description redundant with FIGs. 5 to 9 shall be omitted.

Referring to a first diagram of FIG. 10 (a), a mobile terminal 300 can output a first text 1010. According to the example shown in FIG. 10, the mobile terminal 300 can output 'Looks delicious please give me for hotdogs' as the first text 1010. While the first text 1010 is outputted, the mobile terminal 300 can sense a trigger signal 1020. As the trigger signal is sensed, the mobile terminal 300 can activate a text edit mode.

Referring to a second diagram of FIG. 10 (a), while the text edit mode is activated, the mobile terminal 300 can output a cursor indicator 1030. In this case, the cursor indicator 1030 may correspond to an indicator in bar shape having the same height of unit character or an indicator in block shape having unit character size.

According to one embodiment of the present invention, the mobile terminal 300 can output the cursor indicator 1030 to a preset location of the first text 1010. The mobile terminal 300 can output the cursor indicator 1030 in front or rear of a character included in the first text 1010. For instance, the mobile terminal 300 can output the cursor indicator 1030 in front of a first character included in the first text 1010. According to the example shown in FIG. 10, the mobile terminal 300 can output the cursor indicator to a left side of a first character 'L' of the first text 1010 (i.e., 'Looks delicious please give me for hotdogs').

Referring to a third diagram of FIG. 10 (a), while the cursor indicator 1030 is outputted, the mobile terminal 300 can sense a first voice input 1040. In this case, the first voice input 1040 may correspond to the same voice input of a voice corresponding to at least one portion of the previously outputted first text 1010. For instance, if the first text 1010 is 'Looks delicious please give me for hotdogs', the first voice input 1040 may correspond to 'Looks delici...'.

According to one embodiment of the present invention, based on the first voice input 1040, the mobile terminal 300 can move the cursor indicator 1030 on the first text 1010. For instance, if the first voice input 1040 is 'Looks delic', the mobile terminal 300 can locate the cursor indicator 1030 on the right side of 'c' of 'Looks delic' corresponding to at least one portion of the first text 1010. In particular, the mobile terminal 300 can control the cursor indicator 1030 to naturally move along the first voice input 1040.

Referring to a fourth diagram of FIG. 10 (a), while the cursor indicator 1030 is moving on the first text 1010 along the first voice input 1040, the mobile terminal 300 can sense a touch input signal 1050. In this case, the touch input signal 1050 may correspond to an input signal of touching a random region of a display unit of the mobile terminal 300. In particular, when the cursor indicator 1030 is located on the left side of a character to edit, a user can input the touch input signal 1050. In this case, the touch input signal 1050 may correspond to a long touch input signal of maintaining a touch state until the cursor indicator 1030 passes through all characters to edit.

According to one embodiment of the present invention, while the touch input signal 1050 is sensed, the mobile terminal 300 can sense a second voice input 1060. In doing so, the mobile terminal 300 can move the cursor indicator 1030 based on the second voice input 1060. In this case, unlike the third diagram of FIG. 10 9a), the second voice input 1060 may correspond to a voice input different from a voice corresponding to at least one portion of the previously outputted first text 1010. For instance, if the at least one portion of the first text 1010 is 'for hotdogs', the second voice input 1060 may correspond to 'four hamburgers'. In this case, the mobile terminal 300 can move the cursor indicator 1030 based on the number of syllables of the sensed second voice input 1060 or the contents of the sensed second voice input 1060.

According to one embodiment of the present invention, while the sensing of the touch input signal 1050 is maintained, the mobile terminal 300 can set a block of a moving region based on the second voice input 1060. Through this, a user can visually confirm that a region of characters to be edited is selected. For instance, while the touch input signal 1050 is sensed, the mobile terminal 300 can sense 'four hamburgers' as the second voice input 1060. In doing so, the mobile terminal 300 can set a block of a region 'for hotdogs' corresponding to the at least one portion of the first text 1010.

Referring to a fifth diagram of FIG. 10 (a), the mobile terminal 300 can output a second text 1070 in a manner of substituting the at least one portion of the first text 100 with the second text 1070 based on the second voice input 1060 inputted in the course of maintaining the sensing of the touch input signal 1050. For instance, if the second voice input 1060 inputted in the course of sensing the touch input signal 1050 is 'four hamburgers', the mobile terminal 300 can output 'four hamburgers' corresponding to the second text 1070 in a manner of substituting at least one partial region of the first text 1010 block-set on the basis of the cursor indicator 1030 with 'four hamburgers'.

Referring to FIG. 10 (b), while the first text 1010 is outputted, it is able to observe a moving state of the cursor indicator 1030, a sensing state of the touch input signal 1050, a presence or non-presence of the first voice input 1040 and a presence or non-presence of the second voice input 1060 in detail.

Namely, while the first text 101 is outputted, the mobile terminal 300 can move the cursor indicator 1030 based on the first voice input 1040. While the cursor indicator 1030 is moving based on the first voice input 1040, the mobile terminal 200 can sense the touch input signal 1050. While the touch input signal 1050 is sensed, the mobile terminal 300 can sense the second voice input 1060. Based on the second voice input 1060, the mobile terminal 300 can set a block of a region in which the cursor indicator 1030 moves, Hence, the mobile terminal 300 can output the second text 1070 corresponding to the second voice input 1060 in a manner of substituting at least one partial region of the blocked first text 1010 with the second text 1070.

FIG. 11 is a diagram to describe another example of editing a text using a cursor indicator according to one embodiment of the present invention. In the following description with reference to FIG. 11, description redundant with FIGs. 5 to 10 shall be omitted.

Referring to a first diagram of FIG. 11, a mobile terminal 300 can output a first text 1110. While the first text 1110 is outputted, the mobile terminal 300 can sense a trigger signal 1120. As the trigger signal 1120 is sensed, the mobile terminal 300 can activate a text edit mode.

Referring to a second diagram of FIG. 11, while the text edit mode is activated, the mobile terminal 300 can output a cursor indicator 1130. According to the example shown in FIG. 11, the mobile terminal 300 can output the cursor indicator 1130 to a left side of a first character of 'Looks delicious please give me for hotdogs' corresponding to the first text 1110.

Referring to a third diagram of FIG. 11, the mobile terminal 300 can control the cursor indicator 1130 to move at a preset speed. In particular, unlike FIG. 10, the mobile terminal 300 can control the cursor indicator 1130 to move on the first text 1110 automatically according to the preset speed despite failing to sense a voice input. For instance, the mobile terminal 300 can control the cursor indicator 1130 to move right on the first text 1110 by 1-character unit per 0.1 second. According to the above example, after the cursor 1130 has moved, if 1 second passes, the mobile terminal 300 can output the cursor indicator 1130 to a right side of 10^{th} character 'i' of the first text 1110. In doing so, whether to determine a blank space as 1-charcaer unit may follow the settings of the mobile terminal 300.

Referring to a fourth diagram of FIG. 11, while the cursor indicator 1130 is moving on the first text 1110 at the preset speed, the mobile terminal 300 can sense a touch input signal 1140. According to one embodiment of the present invention, while the touch input signal 1140 is sensed, the mobile terminal 300 can sense a first voice input 1150. In doing so, unlike FIG. 10, the mobile terminal 300 can move the cursor indicator 1130 at a preset speed while the touch input signal 1140 is sensed.

For instance, while the cursor indicator 1130 is located on a left side of a first character 'f' of 'for hotdogs' corresponding to at least one portion of the first text 1110, the mobile terminal 300 can start the sensing of the touch input signal 1140. Moreover, while the cursor indicator 1130 is located on a right side of a last character 's' of 'for hotdogs' corresponding to the at least one portion of the first text 1110, the mobile terminal 300 can end the sensing of the touch input signal 1140. Namely, the mobile terminal 300 can sense the touch input signal 1140 while the cursor indicator 1130 is moving on 'for hotdogs' corresponding to the at least one portion of the first text 1110 at the preset speed.

According to one embodiment of the present invention, while the sensing of the touch input signal 1140 is maintained, the mobile terminal 300 can set a block of a region in which the cursor indicator 1130 moves on the first text 1110 at the preset speed. Through this, a user can visually confirm that a region of characters to be edited is selected.

According to one embodiment of the present invention, while the sensing of the touch input signal 1140 is maintained, the mobile terminal 300 can sense a first voice input 1150. In this case, unlike FIG. 10, the mobile terminal 300 can move the cursor indicator 1130 at a preset speed irrespective of the first voice input 1150. Moreover, according to the example shown in FIG. 11, the mobile terminal 300 can sense 'four hamburgers' as the first voice input 1150.

Referring to a fifth diagram of FIG. 11, the mobile terminal 300 can output a second text 1160 in a manner of substituting at least one portion of the first text 1110 with the second text 1160 based on the first voice input 1150 inputted in the course of maintaining the sensing of the touch input signal 1140. For instance, while the sensing of the touch input signal 1140 is maintained, if the mobile terminal 300 senses 'four hamburgers', the mobile terminal 300 can output 'four hamburgers' in a manner of substituting 'for hotdogs' corresponding to at least one partial region of the blocked first text 1110 in the course of maintaining the sensing of the touch input signal 1140.

FIG. 12 is a diagram to describe one example of adding a text using a cursor indicator according to one embodiment of the present invention. In the following description with reference to FIG. 12, description redundant with FIGs. 5 to 11 shall be omitted.

A first diagram of FIG. 12 may correspond to the third diagram of FIG. 10 (a) or the third diagram of FIG. 11. In particular, referring to the first diagram of FIG. 12, while a first text is outputted, the mobile terminal 300 can move a cursor indicator 1210. The mobile terminal 300 can move the cursor indicator 1210 using one of the embodiments shown in FIG. 10 and FIG. 11. For instance, the mobile terminal 300 can output 'Looks delicious please give me four hotdogs' as the first text. And, the mobile terminal 300 can automatically move the cursor indicator 1210 on the first text at a preset speed. In the following description, assume an example that the mobile terminal 300 moves the cursor indicator 1210 on the first text at the preset speed.

Referring to a second diagram of FIG. 12, while the cursor indicator 1210 is moving on the first text, the mobile terminal 300 can sense a touch input signal 1220. In this case, the touch input signal 1220 may correspond to an input signal of touching a random region of a display unit of the mobile terminal 300. Moreover, the touch input signal 1220 may correspond to a touch input signal different from the touch input signal 1050 of FIG. 10 or the touch input signal 1140 of FIG. 11. For instance, if the touch input signal 1050/1140 of FIG. 10/11 corresponds to a long touch input signal, the touch input signal 1220 of FIG. 12 may correspond to a short touch input signal. Namely, the mobile terminal 300 can distinguish the touch input signal 1050/1140 of FIG. 10/11 corresponds to a long touch input signal and the touch input signal 1220 of FIG. 12 from each other based on a preset touch input signal. For instance, while the cursor indicator 1210 is located on a right side of 'r' of 'four hotdogs' corresponding to at least one portion of the first text, the mobile terminal 300 can sense the short touch input signal 1220.

Referring to a third diagram of FIG. 12, after the touch input signal 1220 has been sensed, the mobile terminal 300 can sense a first voice input 1230 within a preset time. According to the above example, while the cursor indicator 1210 is located on a right side of 'r', the mobile terminal 300 can sense the first voice input 1230. The mobile terminal 300 can sense 'double cheese' as the first voice input 1230.

Referring to a fourth diagram of FIG. 12, the mobile terminal 300 can additionally output a second text 1240 based on the first voice input 1230 to the location of the cursor indicator 1210. For instance, the mobile terminal 300 can additionally output 'double cheese', which is the second text 1240 based on the first voice input 1230, to a right region of 'r' at which the cursor indicator 1210 is located.

Therefore, a user can easily add a text to a desired location despite touching a random region of a display unit of a mobile terminal.

FIG. 13 is a diagram to describe another example of adding a text using a cursor indicator according to one embodiment of the present invention. In the following description with reference to FIG. 13, description redundant with FIGs. 5 to 12 shall be omitted.

A first diagram of FIG. 13 may correspond to the first diagram of FIG. 12. In particular, referring to the first diagram of FIG. 13, while a first text is outputted, the mobile terminal 300 can move a cursor indicator 1310. For instance, the mobile terminal 300 can output 'Looks delicious please give me four hotdogs' as the first text.

Referring to a second diagram of FIG. 13, while the cursor indicator 1310 is moving on the first text, the mobile terminal 300 can sense a touch input signal 1320. In this case, the cursor indicator 1310 may be located on a right side of a last character of the first text. According to the example, the cursor indicator 1310 may be located on the right side of 's' of 'Looks delicious please give me four hotdogs'.

Moreover, in this case, the touch input signal 1220 may correspond to an input signal of touching a random region of a display unit of the mobile terminal 300. Moreover, like the touch input signal 1220 of FIG. 12, the touch input signal 1320 may correspond to a touch input signal different from the touch input signal 1050 of FIG. 10 or the touch input signal 1140 of FIG. 11. For instance, the touch input signal 1320 may correspond to a short touch input signal. For instance, while the cursor indicator 1310 is located on the right side of 's', the mobile terminal 300 can sense the short touch input signal 1320 of touching a random region of the display unit.

Referring to a third diagram of FIG. 13, after the touch input signal 1320 has been sensed, the mobile terminal 300 can sense a first voice input 1330 within a preset time. According to the above example, while the cursor indicator 1310 is located on the right side of's', the mobile terminal 300 can sense 'Three, if it does not' as a first voice input 1330.

Referring to a fourth diagram of FIG. 13, the mobile terminal 300 can additionally output a second text 1340 based on the first voice input 1330 to the location of the cursor indicator 1310. For instance, the mobile terminal 300 can additionally output 'Three, if it does not', which is the second text 1340 based on the first voice input 1330, to a right region of 's' at which the cursor indicator 1310 is located.

Therefore, a user can easily add a text to a desired location despite touching a random region of a display unit of a mobile terminal.

### Embodiment of adding symbol, emoticon or photo according to content of text

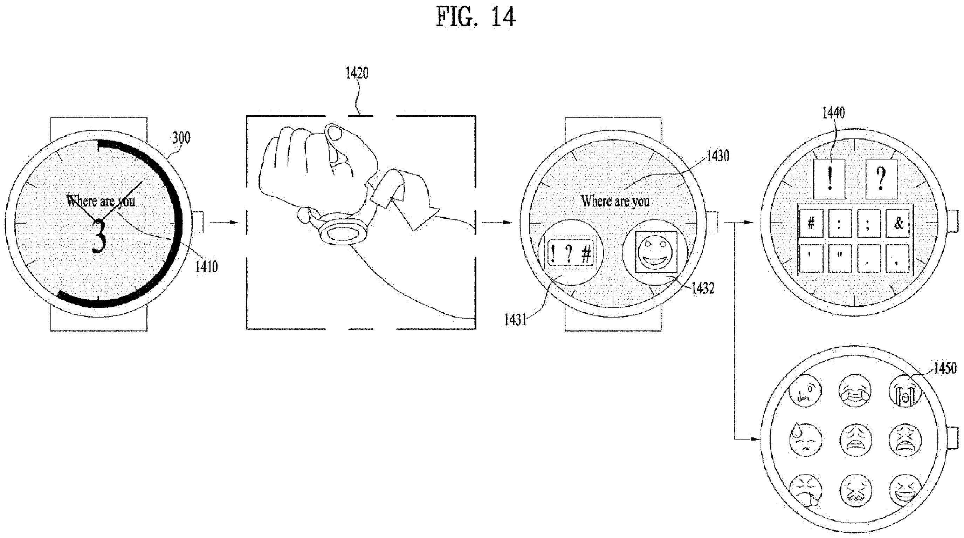

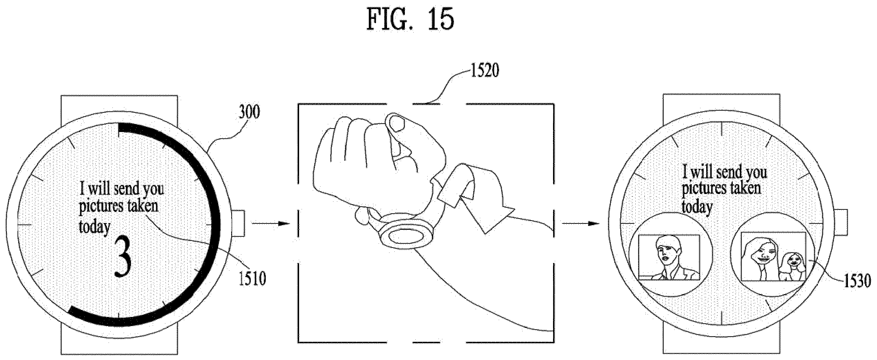

A mobile terminal can output a recommended operation menu based on a content of a previously outputted text. FIG. 14 is a diagram to describe one example of outputting symbol and emoticon adding menus based on a content of text. And, FIG. 15 is a diagram to describe one example of outputting a photo adding menu based on a content of text.

FIG. 14 is a diagram to describe one example of outputting a recommended operation menu based on a content of text according to one embodiment of the present invention. In the following description with reference to FIG. 14, description redundant with FIGs. 5 to 13 shall be omitted.

Referring to a first diagram of FIG. 14, a mobile terminal 300 can output a first text 1410. For instance, the mobile terminal 300 can output 'Where are you' as the first text 1410.

Referring to a second diagram of FIG. 14, while the first text 1410 is outputted, the mobile terminal 300 can sense an input signal 1420. In this case, the input signal 1420 may correspond to a preset signal for controlling a recommended operation menu 1430 to be outputted. For instance, the input signal 1420 may correspond to a gesture signal of turning a wrist having the mobile terminal 300 worn thereon.

Referring to a third diagram of FIG. 14, as the mobile terminal 300 senses the input signal 1420, the mobile terminal 300 can output the recommended operation menu 1430 based on a content of the first text 1410. In this case, the recommended operation menu 1430 may include a symbol add menu 1431, an emoticon add menu 1432 and a photo add menu. Particularly, the photo add menu shall be described in detail with reference to FIG. 15 later.

According to one embodiment of the present invention, the mobile terminal 300 analyzes the content of the first text 1410 and is able to output the recommended operation menu 1430 for proposing a user to add at least one of symbol and emoticon appropriate for the analyzed content of the first text 1410. According to the above example, if the content of the first text 1410 is 'Where are you', the mobile terminal 300 can determine that the content of the first text 1410 is an interrogative sentence and is able to output the recommended operation menu 1430 for proposing to add a question mark or a question emoticon to an end of the first text 1410 according to a result of the determination.

Referring to a fourth diagram of FIG. 14, while the recommended operation menu 1430 is outputted, the mobile terminal 300 can sense an input signal of selecting a specific menu from the recommended operation menu 1430 from a user. If the user selects the symbol add menu 1431 as the recommended operation menu 1430, the mobile terminal 300 can output at least one symbol list 1440. If the user selects the emoticon add menu 1432 as the recommended operation menu 1430, the mobile terminal 300 can output at least one emoticon list 1450.

Moreover, the mobile terminal 300 can sense an input signal of selecting one symbol or emoticon from the at least one symbol list or the at least one emoticon list [not shown in the drawing]. Hence, the mobile terminal 300 can output the selected symbol or emoticon to an end of the fist text 1410. And, the mobile terminal 300 can send the first text 1410 to an external device in a manner that the added symbol or emoticon is included in the first text 1410.

FIG. 15 is a diagram to describe another example of outputting a recommended operation menu based on a content of text according to one embodiment of the present invention. In the following description with reference to FIG. 15, description redundant with FIGs. 5 to 14 shall be omitted.

Referring to a first diagram of FIG. 15, a mobile terminal 300 can output a first text 1510 to a display unit. For instance, the mobile terminal 300 can output 'I will send you pictures taken today' as the first text 1510.

Referring to a second diagram of FIG. 15, while the first text 1510 is outputted, the mobile terminal 300 can sense an input signal 1520. In this case, the input signal 1520 may correspond to a preset signal for controlling a recommended operation menu 1530 to be outputted. For instance, the input signal 1520 may correspond to a gesture signal of turning a wrist having the mobile terminal 300 worn thereon.

Referring to a third diagram of FIG. 15, as the mobile terminal 300 senses the input signal 1520, the mobile terminal 300 can output the recommended operation menu 1530 based on a content of the first text 1510. In this case, the recommended operation menu 1530 may include a photo add menu 1530.

According to one embodiment of the present invention, the mobile terminal 300 analyzes a content of the first text 1510. If a content of 'send photo' is included in the analyzed content of the first text 1510, the mobile terminal 300 can output the photo add menu 1530 for asking a user what kind of photo will be added.

According to the above example, if the content of the first text 1510 is 'I will send you pictures taken today', the mobile terminal 300 can determine that the content of the first text 1510 is to send a photo to a counterpart. Hence, the mobile terminal 300 can output the recommended operation menu 1530 for querying what kind of photo will be added.

According to one embodiment of the present invention, the mobile terminal 300 can output at least one photo list as the photo add menu 1530. Moreover, the mobile terminal 300 can sense an input signal of selecting a specific photo from the at least one photo list. Hence, the mobile terminal 300 can send the first text 1510 to an external device in a manner that the selected photo is added to the first text 1510.

### Embodiment of editing text of block-set region

FIG. 16 is a diagram to describe one example of editing a text of a blocked region according to one embodiment of the present invention. In the following description with reference to FIG. 16, description redundant with FIGs. 5 to 15 shall be omitted.

Referring to a first diagram of FIG. 16, a mobile terminal 100 can output a first text 1610 to SMS content. In this case, the first text 1610 may correspond to a text inputted through voice input, soft key or hard key. For instance, the mobile terminal 100 can output 'Did you arribe? Please come on exit 3'.

Referring to a second diagram of FIG. 16, while the first text 1610 is outputted, the mobile terminal 100 can sense a first input signal 1620 of touching at least one partial region of the first text 1610. In this case, the at least one partial region of the first text 1610 can be determined based on at least one of a size of sensing the first input signal 1620 and a pressure of the first input signal 1620.

Referring to a third diagram of FIG. 16, the mobile terminal 100 can set a block on at least one portion of the first text 1610 according to the first input signal 1620. For instance, the mobile terminal 100 can set a block on 'u arribe?' as the at least one partial region of the first text 1610.

According to one embodiment of the present invention, while the block is set on the at least one partial region of the first text 1610, the mobile terminal 100 can sense a first voice input 1630 within a preset time. For instance, the mobile terminal 100 can sense 'arrive' as the first voice input 1630.

Referring to a fourth diagram of FIG. 16, if at least one portion of the blocked region corresponds to preset similarity with the first voice input 1630, the mobile terminal 100 can output a text 1640 by substituting the at least one portion of the blocked region with the text 1640 corresponding to the first voice input 1630.

Therefore, the mobile terminal 100 can select a region to edit and is able to output a text in which at least one portion of the selected region is substituted according to a voice input recognized thereafter.

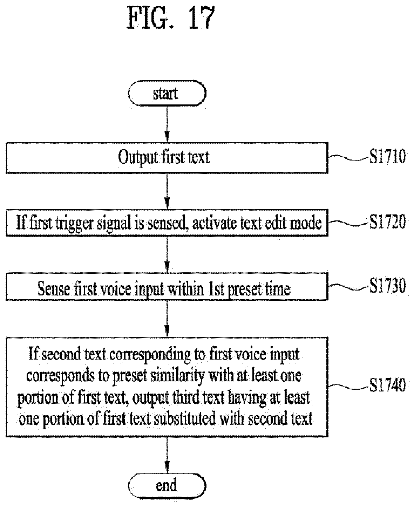

FIG. 17 is a flowchart to describe one example of editing a text based on a voice input according to one embodiment of the present invention. The respective steps described with reference to FIG. 17 can be controlled by the controller shown in FIG. 1A.

Referring to FIG. 17, in a step S1710, a mobile terminal can output a first text to a display unit. In this case, the first text may correspond to a text inputted through voice input, soft key or hard key.

In a step S1720, while the first text is outputted, the mobile terminal can sense a first trigger signal. In this case, the first trigger signal may correspond to a gesture signal or a touch input signal. As the first trigger signal is sensed, the mobile terminal can activate a text edit mode. In this case, the text edit mode may correspond to a waiting mode for sensing an input signal for editing a previously outputted text.

In a step S1730, while the text edit mode is activated, the mobile terminal can sense a first voice input within a first preset time. For instance, while the text edit mode is activated, the mobile terminal can sense the first voice input within 3 seconds. According to one embodiment of the present invention, while the text edit mode is activated, if the mobile terminal fails to sense the first voice input within the preset time, the mobile terminal can send the outputted first text intact to an external device.

In a step S1740, if a second text corresponding to the first voice input corresponds to preset similarity with at least one portion of the first text, the mobile terminal can output a third text in which at least one portion of the first text is substituted with the second text.

In particular, the mobile terminal can determine whether the second text corresponding to the first voice input corresponds to the preset similarity with the at least one portion of the first text using all the conventional technologies known to the public. If it is determined that the second text corresponding to the first voice input corresponds to the preset similarity with the at least one portion of the first text, the mobile terminal can output the third text in which the at least one portion of the first text is substituted with the second text. Hence, the mobile terminal can send the third text to the external device.

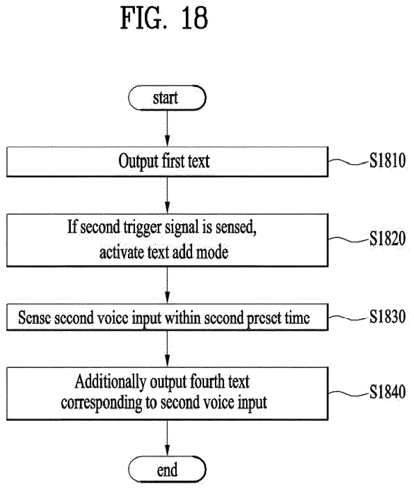

FIG. 18 is a flowchart to describe one example of adding a text based on a voice input according to one embodiment of the present invention. The respective steps described with reference to FIG. 18 can be controlled by the controller shown in FIG. 1A. In the following description with reference to FIG. 18, description redundant with FIG. 17 shall be omitted.

Referring to FIG. 18, in a step S1810, a mobile terminal can output a first text to a display unit.

In a step S1820, while the first text is outputted, the mobile terminal can sense a second trigger signal. In this case, the second trigger signal may correspond to a trigger signal different from the trigger signal of FIG. 17. For instance, if the trigger signal in FIG. 17 corresponds to a long touch input signal, the trigger signal in FIG. 18 may correspond to a short touch input signal. As the second trigger signal is sensed, the mobile terminal can activate a text add mode. In this case, the text add mode may correspond to a waiting mode for sensing an input signal of adding a text to a preset region adjacent to a previously outputted text. Namely, according to one embodiment of the present invention, the mobile terminal can distinctively activate a text edit mode or a text add mode based on a preset trigger signal.

In a step S1830, while the text add mode is activated, the mobile terminal can sense a second voice input within a second preset time. For instance, while the text add mode is activated, the mobile terminal can sense the second voice input within 3 seconds.

In a step S1840, the mobile terminal can additionally output a fourth text corresponding to a second voice. In particular, the mobile terminal can additionally output the fourth text corresponding to the sensed second voice to a preset region adjacent to the first text previously outputted. For instance, the mobile terminal can output the fourth text in a manner that the fourth text is added to a region on a right side of a last character of the first text.

The present invention mentioned in the foregoing description can be implemented in a program recorded medium as computer-readable codes. The computer-readable media may include all kinds of recording devices in which data readable by a computer system are stored. The computer-readable media may include HDD (Hard Disk Drive), SSD (Solid State Disk), SDD (Silicon Disk Drive), ROM, RAM, CD-ROM, magnetic tapes, floppy discs, optical data storage devices, and the like for example and also include carrier-wave type implementations (e.g., transmission via Internet). Further, the computer may include the controller 180 of the terminal. The foregoing embodiments are merely exemplary and are not to be considered as limiting the present disclosure. The present teachings can be readily applied to other types of methods and apparatuses.

## Claims

1. A mobile terminal, comprising:
a microphone;
a sensing unit;
a display; and
a controller operably coupled to the microphone, the sensing unit, and the display, wherein the controller is configured to:
cause the display to display a first text;
activate a text edit mode in response to a first input sensed by the sensing unit while the first text is displayed;
sense a first voice input received via the microphone, if the first voice input is received within a first preset period of time after the text edit mode is activated;
substitute at least one portion of the first text with a second text corresponding to the first voice input if the second text is determined to have a preset similarity to the at least one portion of the first text; and
cause the display to display a third text instead of the first text,
wherein the third text is a text consisting of the second text and the unsubstituted portion of the first text.

2. The mobile terminal of claim 1, wherein the controller is further configured to:
activate a text add mode in response to a second input sensed by the sensing unit while the first text is displayed; and
cause the display to additionally display a fourth text corresponding to a second voice input received via the microphone, the second voice input recognized within a second preset period of time after the text add mode is activated.

3. The mobile terminal of claim 2, wherein the fourth text is displayed at a preset region of the display that is adjacent to the first text.

4. The mobile terminal of any one of claims 1 to 3, wherein:
the controller is further configured to cause the display to display a cursor indicator at a preset location of the first text that is displayed; and
the preset location of the first text corresponds to a location that precedes or follows a character included in the first text.

5. The mobile terminal of claim 4, wherein:
the controller is further configured to cause the cursor indicator displayed on the first text to move in response to a second voice input received via the microphone; and
a moving distance of the cursor indicator is determined based on a number of characters corresponding to the second voice input.

6. The mobile terminal of claim 5, wherein the controller is further configured to cause the display to display a fourth text in response to a user input received while the cursor indicator is moving and a third voice input that is received via the microphone while the user input is received such that at least one portion of the first text is substituted with the fourth text corresponding to the third voice input.

7. The mobile terminal of any one of claims 4 to 6, wherein the controller is further configured to cause the cursor indicator to move on the first text at a preset speed.

8. The mobile terminal of claim 7, wherein the controller is further configured to cause the display to additionally display a fourth text at a location of the cursor indicator in response to a user input received while the cursor indicator is moving and a second voice input received via the microphone after the user input is recognized, the fourth text corresponding to the second voice input.

9. The mobile terminal of any one of claims 1 to 8, wherein the first input is either a preset gesture input or a touch input, wherein the controller is further configured to determine the at least one portion of the first text based on a time point at which the first input is received.

10. The mobile terminal of any one of claims 1 to 9, wherein:
the controller is further configured to cause the display to display a send indicator while the first text is displayed; and
the send indicator is displayed during a second preset period of time following the first preset period of time.

11. The mobile terminal of claim 10, wherein the second preset period of time comprises a dispatch waiting time of the first text.

12. The mobile terminal of any one of claims 1 to 11, wherein the controller is further configured to cause the display to display a send indicator after the first preset period of time.

13. The mobile terminal of any one of claims 1 to 12, wherein:
the controller is further configured to cause the display to display a recommended operation menu based on content of the first text in response to a user input; and
the recommended operation menu comprises at least one selected from the group consisting of a symbol add menu, an emoticon add menu, and a photo add menu.

14. The mobile terminal of any one of claims 1 to 13, wherein the controller is further configured to:
set a block at a region of the first text in response to a user input received during the text edit mode;
recognize a second voice input received via the microphone within a second preset period of time after recognizing the user input; and
cause the display to display the block-set region such that a text within the block-set region is substituted with a fourth text corresponding to the second voice input, wherein the block-set region is determined based on at least one of a size or a pressure of the user input received via the region of the first text.

15. A method for controlling a mobile terminal, the method comprising:
displaying a first text via a display,
activating a text edit mode in response to a first input sensed while the first text is displayed;
sense a first voice input received via a microphone, if the first voice input is received within a first preset period of time after the text edit mode is activated;
substituting at least one portion of the first text with a second text corresponding to the first voice input if the second text is determined to have a preset similarity to the at least one portion of the first text; and
displaying a third text instead of the first text, wherein the third text is a text consisting of the second text and the unsubstituted portion of the first text.

## Patentansprüche

1. Mobiles Endgerät, das aufweist:
ein Mikrofon;
eine Abtasteinheit;
eine Anzeige; und
eine Steuerung, die betriebsfähig mit dem Mikrofon, der Abtasteinheit und der Anzeige gekoppelt ist, wobei die Steuerung konfiguriert ist, um:
zu bewirken, dass die Anzeige einen ersten Text anzeigt;
ansprechend auf eine erste Eingabe, die von der Abtasteinheit abgetastet wird, während der erste Text angezeigt wird, den Texteditiermodus zu aktivieren;
eine über das Mikrofon empfangene erste Spracheingabe abzutasten, wenn die erste Spracheingabe innerhalb einer ersten vorgegebenen Zeitspanne empfangen wird, nachdem der Texteditiermodus aktiviert wurde;
wenigstens einen Abschnitt des ersten Texts durch einen zweiten Text, welcher der ersten Spracheingabe entspricht, zu ersetzen, wenn bestimmt wird, dass der zweite Text eine vorbestimmte Ähnlichkeit mit dem wenigstens einen Abschnitt des ersten Texts hat; und
zu bewirken, dass die Anzeige anstelle des ersten Texts einen dritten Text anzeigt,
wobei der dritte Text ein Text ist, der aus dem zweiten Text und dem nicht ersetzten Abschnitt des ersten Texts besteht.

2. Mobiles Endgerät nach Anspruch 1, wobei die Steuerung ferner konfiguriert ist, um:
ansprechend auf eine zweite Eingabe, die von der Abtasteinheit abgetastet wird, während der erste Text angezeigt wird, einen Texthinzufügemodus zu aktivieren; und
zu bewirken, dass die Anzeige zusätzlich einen vierten Text anzeigt, welcher einer über das Mikrofon empfangenen zweiten Spracheingabe entspricht, wobei die zweite Spracheingabe innerhalb einer zweiten vorbestimmten Zeit, nachdem der Texthinzufügemodus aktiviert wurde, erkannt wird.

3. Mobiles Endgerät nach Anspruch 2, wobei der vierte Text in einem vorbestimmten Bereich der Anzeige, der benachbart zu dem ersten Text ist, angezeigt wird.

4. Mobiles Endgerät nach einem der Ansprüche 1 bis 3, wobei:
die Steuerung ferner konfiguriert ist, um zu bewirken, dass die Anzeige an einer vorbestimmten Stelle des ersten Texts, der angezeigt wird, eine Cursoranzeige anzeigt; und
die vorbestimmte Stelle des ersten Texts einer Stelle entspricht, die einem in dem ersten Text enthaltenen Zeichen vorangeht oder folgt.

5. Mobiles Endgerät nach Anspruch 4, wobei:
die Steuerung ferner konfiguriert ist, um zu bewirken, dass die auf dem ersten Text angezeigte Cursoranzeige sich ansprechend auf eine über das Mikrofon empfangene zweite Spracheingabe bewegt; und
eine Bewegungsstrecke der Cursoranzeige basierend auf einer Anzahl von Zeichen, welche der zweiten Spracheingabe entspricht, bestimmt wird.

6. Mobiles Endgerät nach Anspruch 5, wobei die Steuerung ferner konfiguriert ist, um ansprechend auf eine Benutzereingabe, die empfangen wird, während die Cursoranzeige sich bewegt, und eine dritte Spracheingabe, die über das Mikrofon empfangen wird, während die Benutzereingabe empfangen wird, zu bewirken, dass die Anzeige einen vierten Text anzeigt, so dass wenigstens ein Abschnitt des ersten Texts durch den vierten Text, welcher der dritten Spracheingabe entspricht, ersetzt wird.

7. Mobiles Endgerät nach einem der Ansprüche 4 bis 6, wobei die Steuerung ferner konfiguriert ist, um zu bewirken, dass die Cursoranzeige sich mit einer vorbestimmten Geschwindigkeit auf dem ersten Text bewegt.

8. Mobiles Endgerät nach Anspruch 7, wobei die Steuerung ferner konfiguriert ist, um ansprechend auf eine Benutzereingabe, die empfangen wird, während die Cursoranzeige sich bewegt, und eine zweite Spracheingabe, die über das Mikrofon empfangen wird, nachdem die Benutzereingabe erkannt wird, zu bewirken, dass die Anzeige zusätzlich einen vierten Text an einer Stelle der Cursoranzeige anzeigt, wobei der vierte Text der zweiten Spracheingabe entspricht.

9. Mobiles Endgerät nach einem der Ansprüche 1 bis 8, wobei die erste Eingabe entweder eine vorbestimmte Gesteneingabe oder eine Berührungseingabe ist, wobei die Steuerung ferner konfiguriert ist, um den wenigstens einen Abschnitt des ersten Texts basierend auf einem Zeitpunkt, zu dem die erste Eingabe empfangen wird, zu bestimmen.

10. Mobiles Endgerät nach einem der Ansprüche 1 bis 9, wobei:
die Steuerung ferner konfiguriert ist, um zu bewirken, dass die Anzeige eine Sendeanzeige anzeigt, während der erste Text angezeigt wird; und
die Sendeanzeige während einer zweiten vorbestimmten Zeitspanne, die auf die erste vorbestimmte Zeitspanne folgt, angezeigt wird.

11. Mobiles Endgerät nach Anspruch 10, wobei die zweite vorbestimmte Zeitspanne eine Absendewartezeit für den ersten Text aufweist.

12. Mobiles Endgerät nach einem der Ansprüche 1 bis 11, wobei die Steuerung ferner konfiguriert ist, um zu bewirken, dass die Anzeige nach der ersten vorbestimmten Zeitspanne eine Sendeanzeige anzeigt.

13. Mobiles Endgerät nach einem der Ansprüche 1 bis 12, wobei:
die Steuerung ferner konfiguriert ist, um ansprechend auf eine Benutzereingabe zu bewirken, dass die Anzeige basierend auf Inhalt des ersten Texts ein empfohlenes Bedienmenü anzeigt; und
das empfohlene Bedienmenü wenigstens eines aufweist, das aus der Gruppe ausgewählt wird, die aus einem Symbol-Hinzufügemenü, einem Emoticon-Hinzufügemenü und einem Foto-Hinzufügemenü besteht.

14. Mobiles Endgerät nach einem der Ansprüche 1 bis 13, wobei die Steuerung ferner konfiguriert ist, um:
ansprechend auf eine Benutzereingabe, die während des Texteditiermodus empfangen wird, einen Block an einem Bereich des ersten Texts festzulegen;
eine über das Mikrofon empfangene zweite Spracheingabe innerhalb einer zweiten vorbestimmten Zeitspanne nach dem Erkennen der Benutzereingabe zu erkennen; und
zu bewirken, dass die Anzeige den Blockfestlegungsbereich derart anzeigt, dass ein Text innerhalb des Blockfestlegungsbereichs durch einen vierten Text, welcher der zweiten Spracheingabe entspricht, ersetzt wird, wobei der Blockfestlegungsbereich basierend auf einer Größe und/oder einem Druck der Benutzereingabe, die über den Bereich des ersten Texts empfangen wird, bestimmt wird.

15. Verfahren zur Steuerung eines mobilen Endgeräts, wobei das Verfahren aufweist:
Anzeigen eines ersten Texts über eine Anzeige,
ansprechend auf eine erste Eingabe, die abgetastet wird, während der erste Text angezeigt wird, Aktivieren eines Texteditiermodus;
Abtasten einer über ein Mikrofon empfangenen ersten Spracheingabe, wenn die erste Spracheingabe innerhalb einer ersten vorgegebenen Zeitspanne empfangen wird, nachdem der Texteditiermodus aktiviert wurde;
Ersetzen wenigstens eines Abschnitts des ersten Texts durch einen zweiten Text, welcher der ersten Spracheingabe entspricht, wenn bestimmt wird, dass der zweite Text eine vorbestimmte Ähnlichkeit mit dem wenigstens einen Abschnitt des ersten Texts hat; und
Anzeigen eines dritten Texts anstelle des ersten Texts, wobei der dritte Text ein Text ist, der aus dem zweiten Text und dem nicht ersetzten Abschnitt des ersten Texts besteht.

## Revendications

1. Terminal mobile, comprenant :
un microphone ;
une unité de détection ;
un afficheur ; et
un contrôleur couplé fonctionnellement au microphone, à l'unité de détection et à l'afficheur, dans lequel le contrôleur est configuré pour :
amener l'afficheur à afficher un premier texte ;
activer un mode d'édition de texte en réponse à une première entrée détectée par l'unité de détection pendant que le premier texte est affiché ;
détecter une première entrée vocale reçue via le microphone, si la première entrée vocale est reçue dans une première période de temps prédéfinie après que le mode d'édition de texte a été activé ;
remplacer au moins une partie du premier texte par un deuxième texte correspondant à la première entrée vocale s'il est déterminé que le deuxième texte a une similitude prédéfinie avec l'au moins une partie du premier texte ; et
amener l'afficheur à afficher un troisième texte à la place du premier texte,
dans lequel le troisième texte est un texte constitué du deuxième texte et de la partie non remplacée du premier texte.

2. Terminal mobile selon la revendication 1, dans lequel le contrôleur est en outre configuré pour :
activer un mode d'ajout de texte en réponse à une deuxième entrée détectée par l'unité de détection pendant que le premier texte est affiché ; et
amener l'afficheur à afficher additionnellement un quatrième texte correspondant à une deuxième entrée vocale reçue via le microphone, la deuxième entrée vocale reconnue dans une seconde période de temps prédéfinie après que le mode d'ajout de texte a été activé.

3. Terminal mobile selon la revendication 2, dans lequel le quatrième texte est affiché au niveau d'une région prédéfinie de l'afficheur qui est adjacente au premier texte.

4. Terminal mobile selon l'une quelconque des revendications 1 à 3, dans lequel :
le contrôleur est en outre configuré pour amener l'afficheur à afficher un indicateur de curseur à un emplacement prédéfini du premier texte qui est affiché ; et
l'emplacement prédéfini du premier texte correspond à un emplacement qui précède ou suit un caractère inclus dans le premier texte.

5. Terminal mobile selon la revendication 4, dans lequel :
le contrôleur est en outre configuré pour amener l'indicateur de curseur affiché sur le premier texte à se déplacer en réponse à une deuxième entrée vocale reçue via le microphone ; et
une distance de déplacement de l'indicateur de curseur est déterminée sur la base d'un nombre de caractères correspondant à la deuxième entrée vocale.

6. Terminal mobile selon la revendication 5, dans lequel le contrôleur est en outre configuré pour amener l'afficheur à afficher un quatrième texte en réponse à une entrée utilisateur reçue pendant que l'indicateur de curseur se déplace et une troisième entrée vocale qui est reçue via le microphone pendant que l'entrée utilisateur est reçue de sorte qu'au moins une partie du premier texte soit remplacée par le quatrième texte correspondant à la troisième entrée vocale.

7. Terminal mobile selon l'une quelconque des revendications 4 à 6, dans lequel le contrôleur est en outre configuré pour amener l'indicateur de curseur à se déplacer sur le premier texte à une vitesse prédéfinie.

8. Terminal mobile selon la revendication 7, dans lequel le contrôleur est en outre configuré pour amener l'afficheur à afficher additionnellement un quatrième texte à un emplacement de l'indicateur de curseur en réponse à une entrée utilisateur reçue pendant que l'indicateur de curseur se déplace et une deuxième entrée vocale reçue via le microphone après que l'entrée utilisateur a été reconnue, le quatrième texte correspondant à la deuxième entrée vocale.

9. Terminal mobile selon l'une quelconque des revendications 1 à 8, dans lequel la première entrée est soit une entrée gestuelle prédéfinie, soit une entrée tactile, dans lequel le contrôleur est en outre configuré pour déterminer l'au moins une partie du premier texte sur la base d'un point temporel auquel la première entrée est reçue.

10. Terminal mobile selon l'une quelconque des revendications 1 à 9, dans lequel :
le contrôleur est en outre configuré pour amener l'afficheur à afficher un indicateur d'envoi pendant que le premier texte est affiché ; et
l'indicateur d'envoi est affiché pendant une seconde période de temps prédéfinie suivant la première période de temps prédéfinie.

11. Terminal mobile selon la revendication 10, dans lequel la seconde période de temps prédéfinie comprend un temps d'attente de distribution du premier texte.

12. Terminal mobile selon l'une quelconque des revendications 1 à 11, dans lequel le contrôleur est en outre configuré pour amener l'afficheur à afficher un indicateur d'envoi après la première période de temps prédéfinie.

13. Terminal mobile selon l'une quelconque des revendications 1 à 12, dans lequel :
le contrôleur est en outre configuré pour amener l'afficheur à afficher un menu d'opération recommandée sur la base d'un contenu du premier texte en réponse à une entrée utilisateur ; et
le menu d'opération recommandée comprend au moins l'un sélectionné dans le groupe constitué d'un menu d'ajout de symbole, d'un menu d'ajout d'émoticône, et d'un menu d'ajout de photo.

14. Terminal mobile selon l'une quelconque des revendications 1 à 13, dans lequel le contrôleur est en outre configuré pour :
définir un bloc au niveau d'une région du premier texte en réponse à une entrée utilisateur reçue pendant le mode d'édition de texte ;
reconnaître une deuxième entrée vocale reçue via le microphone dans une seconde période de temps prédéfinie après la reconnaissance de l'entrée utilisateur ; et amener l'afficheur à afficher la région à bloc défini de sorte qu'un texte dans la région à bloc défini soit remplacé par un quatrième texte correspondant à la deuxième entrée vocale, dans lequel la région à bloc défini est déterminée sur la base d'au moins l'une d'une taille ou d'une pression de l'entrée utilisateur reçue via la région du premier texte.

15. Procédé pour contrôler un terminal mobile, le procédé comprenant :
l'affichage d'un premier texte via un afficheur,
l'activation d'un mode d'édition de texte en réponse à une première entrée détectée pendant que le premier texte est affiché ;
la détection d'une première entrée vocale reçue via un microphone, si la première entrée vocale est reçue dans une première période de temps prédéfinie après que le mode d'édition de texte a été activé ;
le remplacement d'au moins une partie du premier texte par un deuxième texte correspondant à la première entrée vocale s'il est déterminé que le deuxième texte a une similitude prédéfinie avec l'au moins une partie du premier texte ; et
l'affichage d'un troisième texte à la place du premier texte, dans lequel le troisième texte est un texte constitué du deuxième texte et de la partie non remplacée du premier texte.
